(19) Europäisches Patentamt / European Patent Office / Office européen des brevets

(11) **EP 2 458 408 A2**

(12) **EUROPEAN PATENT APPLICATION**

(43) Date of publication:
**30.05.2012 Bulletin 2012/22**

(51) Int Cl.:
*G01V 5/00* (2006.01)

(21) Application number: **11167491.7**

(22) Date of filing: **25.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.11.2010 CN 201010528427**

(71) Applicants:
 • **Beijing Zhongdun Anmin Analysis Technology Co., Ltd.**
 **Beijing (CN)**
 • **The First Research Institute of Ministry of Public Security of P.R.C.**
 **Beijing (CN)**

(72) Inventors:
 • **Chen, Xueliang**
 **Beijing (CN)**
 • **Chen, Li**
 **Beijing (CN)**
 • **Huo, Meichun**
 **Beijing (CN)**

 • **Yang, Lirui**
 **Beijing (CN)**
 • **Dong, Mingwen**
 **Beijing (CN)**
 • **Kong, Weiwu**
 **Beijing (CN)**
 • **Yang, Xiaoyue**
 **Beijing (CN)**
 • **Xue, Kai**
 **Beijing (CN)**
 • **Li, Yongqing**
 **Beijing (CN)**
 • **Li, Guangqing**
 **Beijing (CN)**
 • **Zhao, Lei**
 **Beijing (CN)**

(74) Representative: **Stuttard, Garry Philip**
 **Urquhart-Dykes & Lord LLP**
 **Tower North Central**
 **Merrion Way**
 **Leeds LS2 8PA (GB)**

(54) **Dual-energy X-ray body scanning device and image processing method**

(57) A dual-energy X-ray body scanning device, comprising an X-ray generator, an X-ray collimation part, X-ray dual-energy detectors, each comprising a low-energy detector, a filter, and a high-energy detector, an inspection tunnel, a human conveying device, a console desk, a controlling circuit board cabinet, a computer, an image acquisition system, and an image processing and control system. An image processing method is also disclosed. Digital signals are processed by computer for image scrolling display. With high and low energy data, this creative new style inspection system obtains effective atomic number of the inspected articles, and identifies organic, inorganic and mixture material with high efficiency and high quality performance. The dual-energy X-ray body scanning device detects high-energy and low-energy detection data via the X-ray dual-energy detectors, obtain equivalent atomic number information, distinguishes organic compounds, inorganic compounds, and mixtures (especially drugs, explosives, and weapons), and endows them with different colors so that operators can accurately read. The image processing method recognizes and peels off human tissues in an image, and only keeps a portion of the image in which big difference exists between atomic numbers and the human tissues, which makes the image convenient for observation, and an inspection process more fast and high-efficient. The invention can be widely applied to airports, borders, railway stations, subway stations, inter-city bus stations, government agencies, prisons that require safety inspection.

EP 2 458 408 A2

FIG. 1

**Description**

The invention relates to a dual-energy X-ray body scanning device and an image processing method.

Description of the Related Art

Nowadays, X-ray detection devices are widely used to detect illegal items in customs, airports, and so on. A conventional X-ray detection device comprises an X-ray generator, a detector, and a data acquisition system. An X-ray signal emitted by the X-ray generator passes through a particle to be inspected and is received by the detector, and the detector processes the X-ray signal and transforms it into an image only comprising gray information and profile information.

However, an un-neglectable problem with the conventional X-ray detection device is that, operation efficiency thereof is low since operators can only distinguish illegal items according to gray information, profile information by adjusting image brightness, contrast, size and enhancing image edge quality, or based on the operator's own experience.

SUMMARY OF THE INVENTION

In view of the above-described problem, it is one objective of the invention to provide a dual-energy X-ray body scanning device that features high operation efficiency.

It is another objective of the invention to provide an image processing method using a dual-energy X-ray body scanning device that features a high-efficient inspection process.

To achieve the above objectives, in accordance with one embodiment of the invention, provided is a dual-energy X-ray body scanning device , comprising an X-ray generator, an X-ray collimation part, X-ray dual-energy detectors, each comprising a low-energy detector, a filter, and a high-energy detector, an inspection tunnel, a conveying device, a console desk, a circuit board cabinet, a computer, an image acquisition system, and an image processing and control system, the X-ray generator is aligned with an abdomen of a person to be inspected and operates to emit X-rays, the X-ray dual-energy detectors are aligned in the inspection tunnel, and operates to detect high-energy X-rays and low-energy X-rays penetrating the person to be inspected, to transform the high-energy X-rays and the low-energy X-rays into relevant electric signals, and to transmit the electric signals to the image processing and control system, the image processing and control system operates to process the electric signals into digital signals that can be recognized and processed by the computer, the digital signals using different colors to identify different material, the computer is connected to the circuit board cabinet, and operates to process and to scroll display the digital signals, the console desk operates to send a control instruction, the circuit board cabinet is connected to the console desk, whereby receiving the control instruction therefrom and controlling the X-ray generator and the conveying device, the image acquisition system and the image processing and control system are integrated in the circuit board cabinet, and connected to the X-ray dual-energy detector, the low-energy detector operates to receive a low-energy X-ray, the filter operates to filtrate the low-energy X-ray, and the high-energy detector operates to receive a high-energy X-ray.

In accordance with another embodiment of the invention, provided is an image processing method for a dual-energy X-ray body scanning device, comprising collecting high-energy body images and low-energy body images of a person to be inspected via an X-ray generator, an X-ray dual-energy detector, and an image acquisition system, obtaining ratio gray images from the high-energy body images and the low-energy body images, and performing human tissue peeling-off on the ratio gray images.

Advantages of the invention are:

1. The dual-energy X-ray body scanning device detects high-energy and low-energy detection data via the X-ray dual-energy detectors, obtain equivalent atomic number information, distinguishes organic compounds, inorganic compounds, and mixtures, and endows them with different colors so that operators can accurately read;

2. The image processing method recognizes and peels off human tissues in an image, and only keeps a portion of the image in which big difference exists between atomic numbers and the human tissues, which makes the image convenient for observation, and an inspection process more fast and high-efficient.

BRIEF DESCRIPTION OF THE DRAWINGS

Detailed description will be given below in conjunction with preferred embodiments and accompanying drawings, in which

FIG. 1 is a schematic view of a dual-energy X-ray body scanning device of a first embodiment of the invention;

FIG. 2 is a schematic view of a dual-energy X-ray body scanning device of a second embodiment of the invention;

FIG. 3 is a schematic view of a dual-energy X-ray body scanning device of a third embodiment of the invention;

FIG. 4 is a flow chart of an image processing method using a dual-energy X-ray body scanning device of the invention;

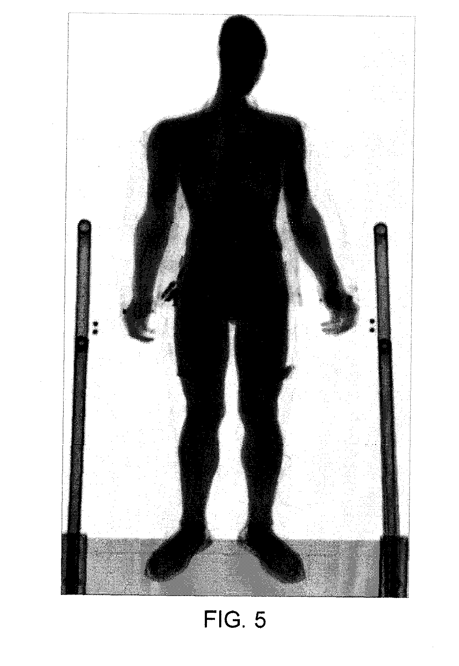

FIG. 5 is a high-energy human image in a dual-energy human image obtained in step S1;

FIG. 6a is a detailed flow chart of step S2 in FIG. 4;

FIG. 6b is a ratio gray image obtained in step S2;

FIG. 7 is a detailed flow chart of step S3 in FIG. 4; and

FIG. 8 illustrates an image after peeling off human tissues.

DETAILED DESCRIPTION OF THE INVENTION

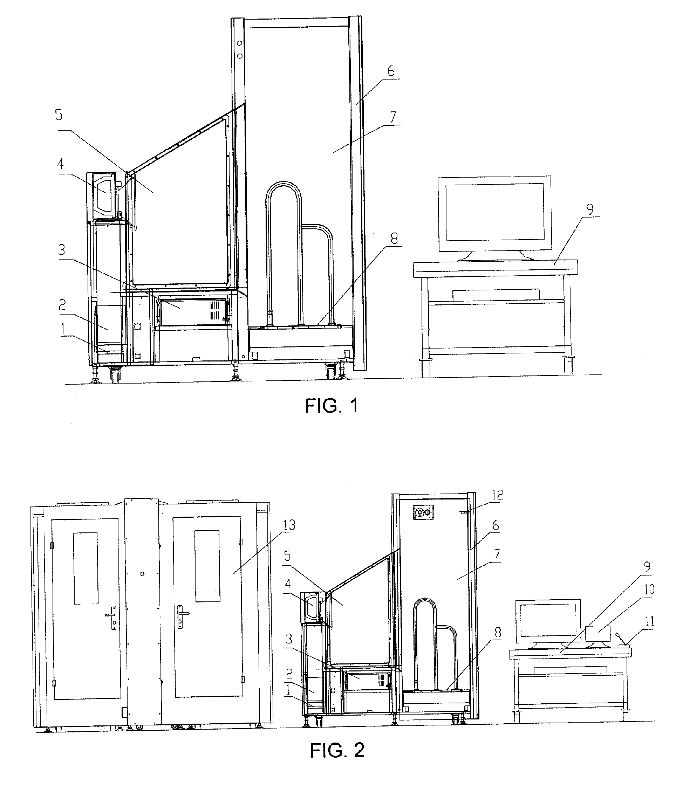

As shown in FIG. 1, a dual-energy X-ray body scanning device of the invention comprises an X-ray generator 4, an X-ray collimation part 5, X-ray dual-energy detectors 6, each comprising a low-energy detector, a filter, and a high-energy detector, an inspection tunnel 7, a conveying device 8, a console desk 9, a fan 1, a circuit board cabinet 2, a computer 3, an image acquisition system, and an image processing and control system.

The X-ray collimation part 5 comprises a collimator and a protection cover.

The high placed X-ray generator 4 is aligned with an abdomen of a person to be inspected and operates to emit X-rays. In this embodiment, the X-rays emitted by the X-ray generator 4 passes through the collimator and form a fan-shaped ray surface.

The X-ray dual-energy detectors 6 are aligned in the inspection tunnel 7, and operate to detect high-energy X-rays and low-energy X-rays penetrating the person to be inspected, to transform the high-energy X-rays and the low-energy X-rays into relevant electric signals, and to transmit the electric signals to the image processing and control system.

The image processing and control system operates to process the electric signals into digital signals that can be recognized and processed by the computer 3, and the digital signals use different colors to identify different material.

The computer 3 is connected to the circuit board box 2, and operates to process and to scroll display the digital signals.

The display of the console desk 9 finally displays the digital signals.

The circuit board cabinet 2 is connected to the console 9, whereby receiving the control instruction therefrom and controlling the X-ray generator 4 and the conveying device 8. In this embodiment, the circuit board cabinet is a center system for implementing all functions of the device, and comprises a system control circuit board, an image signal processing board, an X-ray power board, and an X-ray signal control board.

The image acquisition system and the image processing and control system are integrated in the circuit board cabinet 2, and connected to the X-ray dual-energy detector 6.

The low-energy detector operates to receive a low-energy X-ray, the filter operates to filtrate the low-energy X-ray, and the high-energy detector operates to receive a high-energy X-ray.

After the X-ray passes a person to be inspected, the low-energy detector first receives a transmission signal, then the transmission passes the filter, and finally the high-energy detector receives the transmission signal. The invention can obtain equivalent atomic number information via detected high-energy and low-energy data, distinguish organic compounds, inorganic compounds, and mixtures, and endow them with different colors so that operators can accurately read.

The inspection tunnel 7 uses a doorframe-type structure, and the X-ray dual-energy detectors 6 are aligned in the inspection tunnel 7, and arranged in the shape of a line, an 'L', or a 'C. Moreover, an installation direction of the X-ray dual-energy detectors 6 is the same as a direction of a sector of the X-ray, and the X-ray dual-energy detectors 6 are installed at a position in which the sector vertically radiates.

The conveying device 8 comprises a motor, a conveying belt, and a pair of limit switches. The conveying belt is connected to the motor, and operates to move the person to be inspected by stable dragging, and the limit switches are installed on both ends of the conveying belt, and operates to control travel distance of the conveying device.

The console 9 operates to send a control instruction, and comprises a vehicle, a display and a keyboard. The keyboard is connected to the circuit board cabinet and operates to provide human-computer interaction interface. The display and the keyboard are mounted on the vehicle. The keyboard is a special keyboard comprising image processing keys, a conveying device control key, a power on/off key, and so on.

The fan 1 enables the dual-energy X-ray body scanning device to operate within a reasonable temperature range.

The computer 3 is arranged in a manner of guide way, which makes it convenient for use and maintenance. The computer 3 is connected to the circuit board cabinet 2 via a net wire.

A front end of the image processing and control system is connected to the X-ray dual-energy detector 6, a back end thereof transmits an image processing and control signal to the computer 3 whereby processing a collected X-ray dual-energy signal. Different colors are used to identify different material of an image of an inspected item.

Operation principle of the dual-energy X-ray body scanning device is as follows: as an operator presses a power on/off key of the console desk 9, the computer 3 is started, the system control circuit board in the circuit board cabinet 2 sends an instruction to the X-ray generator 4 according to a preset program, and manages the X-ray generator 4 via the X-ray signal control board whereby optimizing operating status of the X-ray generator 4. After management is completed, the computer 3 controls the conveying device 8 to be in an initial position according to an instruction sent to the system control circuit board, at this time the device is in a normal operating state.

As a person to be inspected stands on the conveying belt and enters the inspection tunnel 7, his hands and legs are placed on specified positions and he wears an eyeshade. The operator sends an operating instruction to the conveying device 8 via the keyboard of the console desk 9 and the system control circuit board, whereby driving the conveying belt to move. Meanwhile, the X-ray generator 4 goes through tube conditioning procedure and conveying device 8 sends a signal to CCPU in circuit board cabinet 2 via computer 3 to set it in initial position. The system is in working state.. As the X-ray penetrates a human body, the X-ray dual-energy detector 6 receives the X-ray and transforms the X-ray into relevant electric signal. The image processing and control system process the electric signal into a digital signal that can be recognized and processed by the computer 3, and the computer 3 processes the digital signal and the display of the console desk 9 scroll display the digital signal. After the person completely passes an X-ray sector, the conveying belt stops operation under the control of the limit switch, and the X-ray generator 4 stops transmitting, and image collection is completed. At this time, the display displays an X-ray transmission image of the person (colored scroll image), and the operator determines whether the person carries illegal items according to the image.

Therefore, the dual-energy X-ray body scanning device detects high-energy and low-energy detection data via the X-ray dual-energy detector, obtains equivalent atomic number information, distinguishes organic compounds, inorganic compounds, and mixtures, and endows them with different colors so that operators can accurately read.

As shown in FIG. 2, a dual-energy X-ray body scanning device of a second embodiment of the invention is almost the same as that of the first embodiment, except that it further comprises a cover 13 surrounding the whole inspection tunnel 7, and an interlock switch 12 installed on the cover 13 whereby preventing leakage of X-rays. The X-ray can only be transmitted if the cover 13 is closed. A video monitoring system 10 and a voice interaction system 11 are installed between the inspection tunnel 7 and the console desk 9, the video monitoring system 10 operates to monitor body conditions of the person to be inspected, and the voice interaction system 11 allows communication with the person.

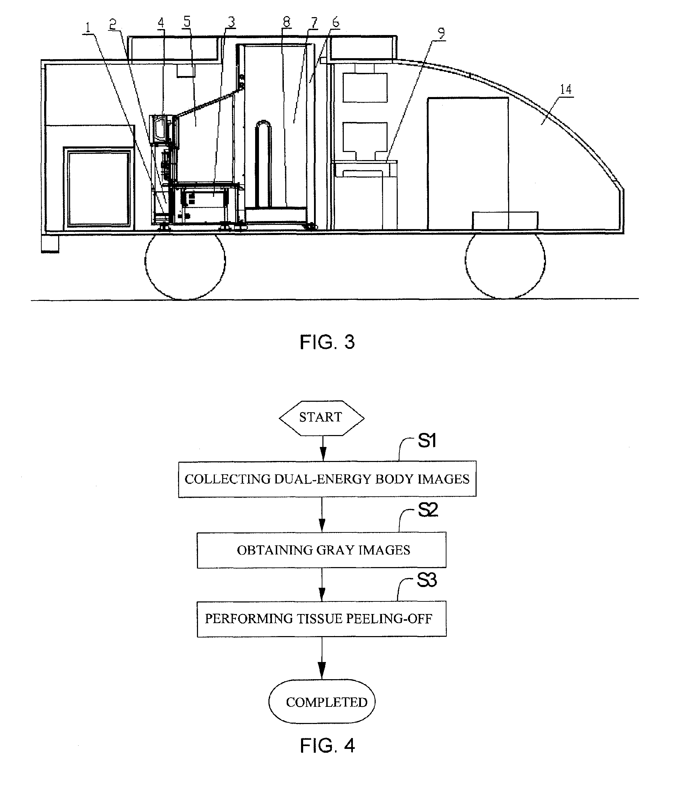

As shown in FIG. 3, a dual-energy X-ray body scanning device of a third embodiment of the invention is almost the same as that of the second embodiment, except that it is installed in a car 14, and thus becoming an safety inspection device with good practicability, flexibility, and convenience, and meeting requirement for inspection in different occasions. As the device is installed in the car 14, the vehicle of the console 9 is not used.

After a dual-energy X-ray body image is collected, in addition to some normal auxiliary image processing, such as highlighting, darkening, edge enhancement, partial enlargement, black/white display, image reversing, image recall, and so on, the operator can use an image processing method via the dual-energy X-ray body scanning device of the invention, whereby making the processed image more convenient for observation, and the inspection process more efficient.

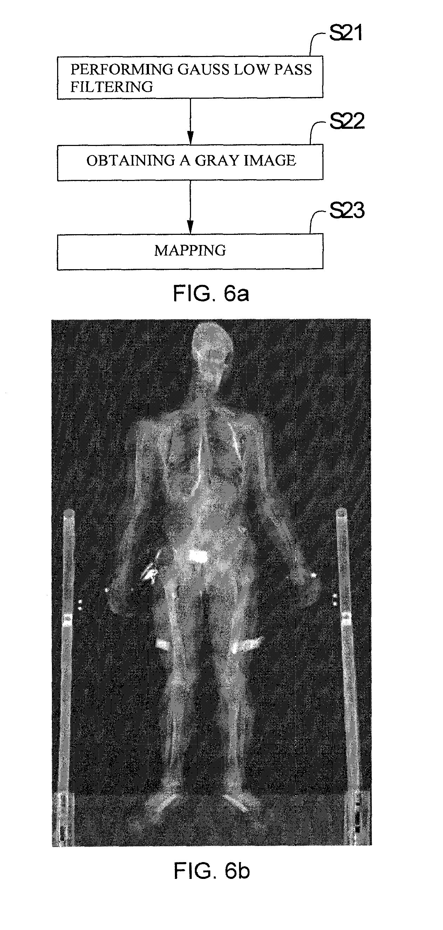

As shown in FIG. 4, an image processing method for a dual-energy X-ray body scanning device is shown. In step S1, an X-ray generator, an X-ray dual-energy detector, and an image acquisition system collect high-energy body images and low-energy body images of a person to be inspected via X-ray dual-energy detectors, and an image acquisition system. In step S2, ratio gray images are obtained from the high-energy body images and the low-energy body images (referring to FIG. 6b). The gray image is obtained by comparing the low-energy body images with the high-energy body images, and mapping with corresponding pixel percentage, and ratio gray level of the gray image is the same as that of the high-energy body images and the low-energy body image. In step S3, human tissue peeling-off is performed on the ratio gray images.

As shown in FIG. 6a, a detailed flow chart of step S2 in FIG. 4 is shown. In step S21, a Gauss low pass filter operator is respectively convolved with a high-energy body image and a low-energy body image, and the processed image is smoother and has higher image signal-noise ratio. In this embodiment, the Gauss low pass filter operator h is

equal to $h = \dfrac{1}{16}\begin{bmatrix} 1 & 2 & 1 \\ 2 & 4 & 2 \\ 1 & 2 & 1 \end{bmatrix}$.

In step S22, a ratio R between low energy and high energy of each pixel in the image is obtained via the convolved low-energy image and the convolved high-energy image, and the equation is $R(i,j) = \dfrac{LO(i,j)}{HI(i,j)}$,

where HI is a high-energy image, LO is a low-energy image, and R is a ratio between the low energy and the high energy.

In step S23, the image is mapped into a ratio gray image having a ratio gray level consistent with that of each of the low-energy body image and the high-energy body image via the ratio image R. In details, the highest value v is found in the ratio gray image R, and then each pixel in the ratio image R is processed according to the equation

$R'(i,j) = \dfrac{R(i,j)}{a \times v} \times t$,

where R is a ratio between the low energy and the high energy, t is a peak value of an image signal. For example, if an image signal of the X-ray is 12 bit, t is equal to 4095, if an image signal of the X-ray is 16 bit, t is equal to 65535, v is the highest value of the ratio image, and a is a proportional coefficient no greater than 1.

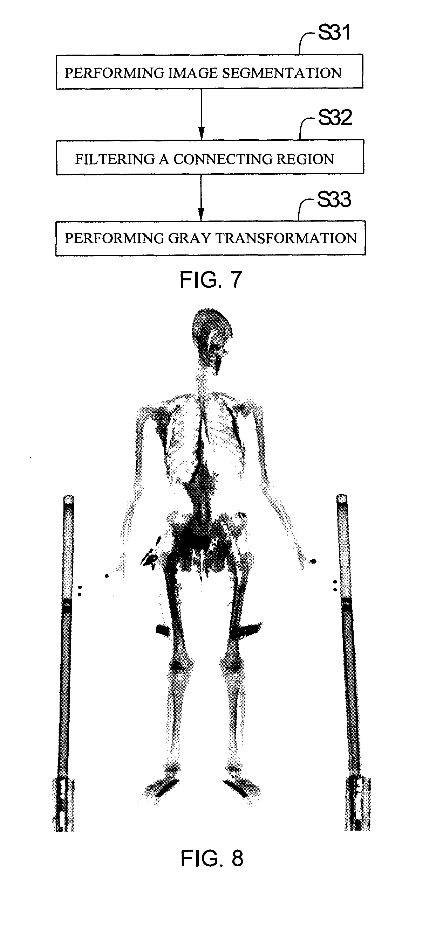

As shown in FIG. 7, a detailed flow chart of step S3 in FIG. 4 is shown. In step S31, the ratio gray image is segmented, and a part of the ratio gray image meeting requirement for segmentation threshold is kept, and connecting regions of segmentation results is marked (the connecting region refers to an independent target region after segmentation). s(HI(i,j)) represents the segmentation threshold, and is a monotonic function related to pixel gray. A segmenting rule is as follows:

$$SR(i,j) = \begin{cases} R'(i,j) & if \quad R'(i,j) \geq s(HI(i,j)) \\ 0 & else \end{cases} ;$$

$$Z(i,j) = \begin{cases} 4095 & if \quad R'(i,j) \geq s(HI(i,j)) \\ 0 & else \end{cases} ;$$

where SR is a ratio gray image after segmentation, Z marks a connecting region of the segmentation results.

In step S32, a marking method of a connecting region similar to region growth is implemented. The method is: to mark the whole connecting region for one time, during the marking process, a range of a minimum external-connected rectangle is recorded, and other parameters such as area of the connecting region, the average gray of the connecting region corresponding to the ratio gray image and so on are calculated in the range. Then the next region is marked and calculated until all connecting regions are marked and calculated. The main steps comprise:

(1) marking each independent connecting region in the connecting region, and obtaining area of each independent connecting region, average gray of the independent connecting region corresponding to the ratio gray image; and

(2) filtering the connecting region according to an empirical area threshold and a threshold value of an average gray value, and keeping connecting regions in which area thereof is no less than the empirical area threshold, and average gray of the connecting region corresponding to the ratio gray image is no greater than the threshold value of an average gray value.

In details, an image input in the connecting region is scanned firstly, a first point in an unmarked region is found and marked, eight pixels in the vicinity of the first point (upper, bottom, left, right, left upper, left bottom, right upper, right bottom) are checked and those meet requirement for connectivity are marked, new-added marked points are marked as seed points. During the following marking process, a seed point is continuously taken out from an array recording seed points in a memory and the above-mentioned process is repeated until the array recording seed points is empty, and thus marking of a connecting region is finished. Area of the connecting point and a range of a minimum external-connected rectangle are recorded, and the average gray of the connecting region corresponding to the ratio gray image according to the range of the minimum external-connected rectangle is calculated. Filtering and judgment are performed on the connecting region, the next unmarked region in the connecting region is marked and the next connecting region is judged and performed, until all connecting regions are marked, filtered, and judged.

In step S32, the connecting regions of segmentation results are filtered, and human tissues in the image is removed, the image SR after filtering the connecting region is indicated as SR'.

In step S33, gray transformation is performed on the ratio gray image after filtering the connecting region, and obtaining a part of the image Eo in which big difference exists between atomic numbers and the human tissues. In this embodiment, the gray transformation comprises linear gray extension and color reversing, namely performing linear gray extension on the image after filtering the connecting area, and reversing colors of the image after linear gray extension.

Gray transformation is performed according to the following formula:

$$Eo(i,j) = \begin{cases} t - \left( \dfrac{SR'(i,j) - lv}{hv - lv} \right) \times t & if \quad lv < SR'(i,j) \leq hv \\ t & else \end{cases}$$

where lv is a low-gray empirical threshold in the ratio gray image after filtering the connecting area, hv is a high-gray empirical threshold in the ratio gray image, t is a peak gray value of an image signal, and SR' is an image after filtering the connecting area.

Pixel gray between lv and hv in the image SR' is extended to 0 to t, and then color reversing is performed (namely totally reversing a gray value).

After step S33, an image with human tissues being peeled off is obtained (in FIG. 8). Compared with FIG. 6b, it can be seen that muscles, skin, internal organs in human body are peeled off, and only part of bones, and illegal items 100 having big difference with atomic numbers, such as drugs, explosives, metallic and non-metallic weapons are kept, these items have less gray level, and are obvious in the image for observation.

The image processing method of the invention identifies and peels off human tissues in an image and only parts in the image having big difference with human tissues are kept, which makes the processed image more convenient for observation, and the inspection process more faster and efficient.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

**Claims**

1. A dual-energy X-ray body scanning device used for inspection of human body for hidden object, comprising
   an X-ray generator;
   an X-ray collimation part;
   X-ray dual-energy detectors;
   an inspection tunnel;
   a conveying device conveying inspected person;
   a console desk;
   a controlling circuit board cabinet;
   a computer;
   an image acquisition system; and
   an image processing and control system;
   wherein
   the X-ray generator is at the abdomen level of a person to be inspected; said X-ray dual-energy detectors are aligned with said inspection tunnel, and operates to detect high-energy X-rays and low-energy X-rays penetrating said person to be inspected, to transform said high-energy X-rays and said low-energy X-rays into relevant electric signals, and to transmit said electric signals to said image processing and control system;
   said image processing and control system operates to process said electric signals into digital signals that can be recognized and processed by said computer, said digital signals using different colors to identify different material;
   said computer is connected to said controlling circuit board cabinet, and operates to process and to scroll display said digital signals;
   said console desk operates to send a control instruction;
   said controlling circuit board cabinet is connected to said console desk, whereby receiving said control instruction therefrom and controlling said X-ray generator and said conveying device;
   said image acquisition system and said image processing and control system are integrated in said controlling circuit board cabinet, and connected to said X-ray dual-energy detector;
   said low-energy detector operates to receive a low-energy X-ray;
   said filter operates to filtrate said low-energy X-ray; and
   said high-energy detector operates to receive a high-energy X-ray.

2. The dual-energy X-ray body scanning device of claim 1, wherein
   said inspection tunnel uses a doorframe-type structure;
   said X-ray dual-energy detectors are aligned in said inspection tunnel, and arranged in the shape of a line, an 'L', or a 'C';
   a video monitoring system and a voice interaction system are installed between said inspection tunnel and said console desk;
   said video monitoring system operates to monitor body conditions of the person to be inspected; and
   said voice interaction system allows communication with said person to be inspected.

3. The dual-energy X-ray body scanning device of claim 1, wherein said console desk comprises a display, a keyboard, a vehicle, and said display and said keyboard are mounted on the vehicle.

4. The dual-energy X-ray body scanning device of claim 1, wherein said X-ray collimation part comprises a collimator and a protection cover.

5. The dual-energy X-ray body scanning device of claim 1, wherein
said conveying device comprises a motor, a conveying belt, and a pair of limit switches;
said conveying belt is connected to said motor, and operates to move said person to be inspected by stable dragging; and
said limit switches are installed on both ends of the conveying belt, and operates to control travel distance of said conveying device.

6. The dual-energy X-ray body scanning device of claim 1, further comprising a fan enabling said dual-energy X-ray body scanning device to operate within a reasonable temperature range; and
a cover surrounding the inspection tunnel, an interlock switch being installed on the cover whereby preventing leakage of X-rays.

7. An image processing method for a dual-energy X-ray body scanning device, comprising
collecting high-energy body images and low-energy body images of a person to be inspected via an X-ray generator, an X-ray dual-energy detector, and an image acquisition system;
obtaining ratio gray images from said high-energy body images and said low-energy body images; and
performing human tissue peeling-off on said ratio gray images.

8. The image processing method of claim 7, wherein the step of obtaining said ratio gray images from said high-energy body images and said low-energy body images comprises:

respectively convolving a Gauss low pass filter operator with a high-energy body image and a low-energy body image;
obtaining a ratio between low energy and high energy of each pixel in the image via said convolved low-energy image and said convolved high-energy image; and
mapping into a ratio gray image having a ratio gray level consistent with that of each of the low-energy body image and high-energy body image via a ratio image.

9. The image processing method of claim 8, wherein said Gauss low pass filter

operator h is equal to $h = \dfrac{1}{16} \begin{bmatrix} 1 & 2 & 1 \\ 2 & 4 & 2 \\ 1 & 2 & 1 \end{bmatrix}$.

10. The image processing method of claim 8, wherein the step of mapping into a ratio gray image having a ratio gray level consistent with that of each of the low-energy body image and high-energy body image via a ratio image comprises:

finding the highest value in the ratio image; and

processing each pixel in said ratio image according to the following formula $R'(i, j) = \dfrac{R(i, j)}{a \times v} \times t$

, where R is a ratio between low energy and high energy, t is a peak value of an image signal, v is the highest value of said ratio image, a is a proportional coefficient no greater than 1, R' is a gray image after mapping.

11. The image processing method of claim 7, wherein the step of performing human tissue peeling-off on said ratio gray images comprises:

segmenting said ratio gray image, keeping a part of said ratio gray image meeting requirement for segmentation threshold, and marking connecting regions of segmentation results;

filtering said connecting regions of segmentation results and removing human tissues in said image; and

performing gray transformation on said ratio gray image after filtering, and obtaining a part of the image in which big difference exists between atomic numbers and said human tissues.

**12.** The image processing method of claim 11, wherein the step of filtering said connecting regions of segmentation results and removing human tissues in said image comprises:

marking each independent connecting region in said connecting region, and obtaining area of each independent connecting region, average gray of said independent connecting region corresponding to said ratio gray image; and

filtering the connecting region according to an empirical area threshold and a threshold value of an average gray value, and keeping connecting regions in which area thereof is no less than the empirical area threshold, and average gray of the connecting region corresponding to said ratio gray image is no greater than said threshold value of an average gray value.

**13.** The image processing method of claim 12, wherein the step of marking each independent connecting region in the connecting region, and obtaining area of each independent connecting region, average gray of the independent connecting region corresponding to the ratio gray image comprises:

scanning an image input in a connecting area line by line whereby finding a first point of an unmarked region, and marking the first point;

checking eight pixels in the vicinity of the first point, marking unmarked points meeting requirement for connectivity, and recording new-added marked points as seed points; and

continuously taking out a seed point from an array recording seed points in a memory and repeating the above-mentioned processes until the array recording seed points is empty, finishing marking of a connecting region, recording area of the connecting point and a range of a minimum external-connected rectangle, and calculating the average gray of the connecting region corresponding to the ratio gray image according to the range of the minimum external-connected rectangle.

**14.** The image processing method of claim 11, wherein the step of performing gray transformation on said ratio gray image after filtering, and obtaining a part of the image in which big difference exists between atomic numbers and said human tissues comprises:

performing linear gray extension on the image after filtering said connecting area; and

reversing colors of the image after linear gray extension.

**15.** The image processing method of claim 11, wherein the step of performing linear gray extension on the image after filtering said connecting area is based on the following formula:

$$Eo(i,j) = \begin{cases} t - \left( \dfrac{SR'(i,j) - lv}{hv - lv} \right) \times t & \quad if \quad lv < SR'(i,j) \leq hv \\ \\ t & \quad else \end{cases}$$

where lv is a low-gray empirical threshold in said ratio gray image after filtering said connecting area, hv is a high-gray empirical threshold in said ratio gray image, t is a peak gray value of an image signal, and SR' is an image after filtering said connecting area.

FIG. 1

FIG. 2

FIG. 3

FIG. 4

FIG. 5

S21

| PERFORMING GAUSS LOW PASS FILTERING |
|---|

↓

S22

| OBTAINING A GRAY IMAGE |
|---|

↓

S23

| MAPPING |
|---|

## FIG. 6a

## FIG. 6b

| PERFORMING IMAGE SEGMENTATION | S31 |

| FILTERING A CONNECTING REGION | S32 |

| PERFORMING GRAY TRANSFORMATION | S33 |

FIG. 7

FIG. 8